# EUROPÄISCHE PATENTSCHRIFT

(11) **EP 2 919 425 B1**
(45) Veröffentlichungstag und Bekanntmachung des Hinweises auf die Patenterteilung: **29.08.2018**
(21) Anmeldenummer: 15156315.2
(22) Anmeldetag: 24.02.2015
(51) Int. Cl.: H04L 12/859, H04L 12/801, H04L 12/851, H04L 12/823

(54) **Verfahren für die Kontrolle eines Datenverkehrs zwischen einem Kommunikationsgerät und einem Kommunikationsnetz über eine Kommunikationsverbindung**
Method for controlling data transmission between a communication device and a communication network via a communication link
Procédé de contrôle d'un trafic de données entre un appareil de communication et un réseau de communication par l'intermédiaire d'une liaison de communication

(30) Priorität: 11.03.2014 DE 102014103196
(43) Veröffentlichungstag der Anmeldung: 16.09.2015
(73) Patentinhaber: Vodafone GmbH, 40549 Düsseldorf (DE)
(72) Erfinder: Cakmak, Yalcin, 40474 Düsseldorf (DE); Fidelius, Steffen, 41464 Neuss (DE)
(74) Vertreter: Patentanwälte Bals & Vogel

(56) Entgegenhaltungen:
- EP-A1- 1 783 961
- US-A1- 2008 089 237
- US-A1- 2010 144 332
- US-A1- 2010 332 667
- US-A1- 2012 047 379

## Beschreibung

Die vorliegende Erfindung betrifft ein Verfahren für die Kontrolle eines Datenverkehrs zwischen einem Kommunikationsgerät und einem Kommunikationsnetz über eine Kommunikationsverbindung, ein Computerprogrammprodukt zur Ausführung auf einer Rechnereinheit sowie eine Datenkontrolleinheit für ein Kommunikationsgerät insbesondere zur Ausführung eines erfindungsgemäßen Verfahrens.

Es ist grundsätzlich bekannt, dass Kommunikationsgeräte, wie zum Beispiel Mobiltelefone, Festnetztelefone, Tablett-PCs, Laptops oder Ähnliches eine Kommunikationsverbindung für den Austausch von Daten aufbauen wollen. Bei dem Austausch von Daten kann es sich sowohl um Sprachdaten, Videodaten oder sämtliche andere Formen von Daten handeln. Für diesen Datenaustausch sind häufig auf dem jeweiligen Kommunikationsgerät entsprechende Applikationen angeordnet und installiert. Applikationen auf einem Gerät, welche eine Kommunikation über ein Kommunikationsnetz durchführen können, wollen oder sollen, werden im Sinne der vorliegenden Erfindung als Kommunikationsapplikationen bezeichnet. Dabei kann es sich um installierte Programme auf dem Kommunikationsgerät handeln. Um eine entsprechende Kommunikation durchzuführen, wird bei bekannten Kommunikationsgeräten eine entsprechende Datenkommunikationsanfrage an das Kommunikationsnetz ausgehend von einer Kommunikationsapplikation gestellt. Anschließend wird diese Kommunikationsverbindung hergestellt, so dass ein Datenaustausch in die eine Richtung, in die andere Richtung oder bidirektional erfolgen kann. In jedem Fall ist ein Datenaustausch zwischen dem Kommunikationsnetz und dem Kommunikationsgerät mit sogenanntem Traffic, also Datenverkehr bzw. Datenkommunikation, über das Kommunikationsnetz verbunden. Aus der US 2010/0144332 A1 ist ein Verfahren bekannt, bei welchem eine Priorisierung von Applikationen auf einer Mobilvorrichtung erfolgt. Weiter zeigt die EP 1 783 961 A1 eine Lösung für die Priorisierung von Datenströmen in ein mobiles Netzwerk. Aus der US 2008/0089237 A1 ist ein Verfahren für die dynamische Anpassung von Priorisierungen bekannt. Die US 2010/332667 A1 offenbart weitere Verfahren zur Priorisierung von Datenströmen unterschiedlicher Anwendungen.

Nachteilhaft bei bekannten Verfahren und bei bekannten Kommunikationsgeräten ist es, dass der Datenverkehr im Wesentlichen unkontrolliert stattfindet. So sind in den meisten Fällen Kommunikationsgeräte nicht nur mit einer einzigen Kommunikationsapplikation, sondern vielmehr mit einer Vielzahl unterschiedlichster Kommunikationsapplikationen ausgestattet. Darunter können zum Beispiel Mailprogramme, Kurznachrichtensysteme, Videotelefonieprogramme, Datenaustauschprogramme, Cloudprogramme, Musikprogramme oder viele weitere Applikationsmöglichkeiten fallen. Darüber hinaus sind moderne Kommunikationsgeräte in der Lage, viele Kommunikationsapplikationen parallel auf dem Kommunikationsgerät laufen zu lassen. So ist es beispielsweise möglich, dass im Vordergrund auf der Anzeigevorrichtung eines Kommunikationsgerätes der entsprechende Nutzer momentan seine E-Mails bearbeitet beziehungsweise eine E-Mail liest. Im Hintergrund kann bereits ein Datenabgleich von Kurznachrichten erfolgen. Ebenfalls ist es möglich, dass bereits im Hintergrund ein Radiodienst einen Streamingdienst eines Internetradios durchführt. All diese verschiedenen Kommunikationsapplikationen senden und empfangen also parallel Daten, so dass parallele Datenkommunikationskanäle zwischen dem Kommunikationsgerät und dem Kommunikationsnetz aufgemacht werden. Dies führt dazu, dass die Bandbreite und die Latenz der entsprechenden Datenkommunikationsverbindung darunter leiden, da sie zu einer größeren Breite beziehungsweise mit stärkerer Latenz ausgenutzt werden. Dies kann dazu führen, dass beim Erreichen der maximalen Bandbreite beziehungsweise der maximalen Latenz Einschränkungen bei den einzelnen Kommunikationsapplikationen für den Nutzer in Kauf genommen werden müssen. Wird beispielsweise eine Vielzahl von Kommunikationsverbindungen im Hintergrund durchgeführt, kann dies auf die Qualität von Streamingdiensten, wie zum Beispiel dem Anhören eines Internetradios, negative Einfluss nehmen.

Es ist Aufgabe der vorliegenden Erfindung, die voranstehend beschriebenen Nachteile zumindest teilweise zu beheben. Insbesondere ist es Aufgabe der vorliegenden Erfindung, in kostengünstiger und einfacher Weise die Datenverbindung für den Nutzer und/oder das Netz zu verbessern.

Die voranstehende Aufgabe wird gelöst durch ein Verfahren mit den Merkmalen des Anspruchs 1, ein Computerprogrammprodukt mit den Merkmalen des Anspruchs 6 sowie eine Datenkontrolleinheit mit den Merkmalen des Anspruchs 7 Weitere Merkmale und Details der Erfindung ergeben sich den Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Computerprogrammprodukt sowie der erfindungsgemäßen Datenkontrolleinheit und jeweils umgekehrt, so dass bezüglich der Offenbarung zu den einzelnen Erfindungsaspekten stets wechselseitig Bezug genommen wird beziehungsweise werden kann.

Ein erfindungsgemäßes Verfahren dient der Kontrolle eines Datenverkehrs zwischen einem Kommunikationsgerät und einem Kommunikationsnetz über eine Kommunikationsverbindung. Hierfür weist das erfindungsgemäße Verfahren die folgenden Schritte auf:
- Überwachen von Kommunikationsapplikationen, insbesondere aller Kommunikationsapplikationen auf dem Kommunikationsgerät,
- Erkennen einer Datenkommunikationsanfrage einer aktiven Kommunikationsapplikation,
- Vergleich der aktiven Kommunikationsapplikation mit wenigstens einem Priorisierungsmerkmal,
- Freigeben, Reduzieren oder Blockieren einer Datenkommunikation der aktiven Kommunikationsapplikation auf Basis des Ergebnisses des Vergleichs.

Ein erfindungsgemäßes Verfahren greift also in die Qualität beziehungsweise die Quantität einer durchgeführten Datenkommunikation einer aktiven Kommunikationsapplikation ein. Dieses Eingreifen erfolgt auf Basis eines Vergleichs mit wenigstens einem Priorisierungsmerkmal. Unter einem Priorisierungsmerkmal ist im Sinne der vorliegenden Erfindung eine Information zu verstehen, welche die Priorität der Nutzung einer spezifischen Kommunikationsapplikation zuteilt. Dabei kann der Kern der Prioritätszuweisung für das Priorisierungsmerkmal unterschiedliche Herkünfte aufweisen. So kann das Priorisierungsmerkmal beispielsweise den tatsächlichen Nutzerwunsch widerspiegeln. So sind Priorisierungsmerkmale möglich, die aktiv vom Benutzer vergeben werden und somit seine für ihn wichtigsten Kommunikationsapplikationen kennzeichnen. Auch eine gerätespezifische Priorisierung ist für die Priorisierungsmerkmale im Sinne der vorliegenden Erfindung denkbar. So ist es möglich, dass beispielsweise die Kommunikationsapplikation, welche sich im Vordergrund und damit aktiv auf der Anzeigevorrichtung des Kommunikationsgerätes befindet, automatisch das höchste Priorisierungsmerkmal erhält. Selbstverständlich sind jedoch auch netzseitige Funktionen als Basis für eine Priorisierung in Form der Priorisierungsmerkmale denkbar. Insbesondere bei einer Situation mit zwei oder mehr Kommunikationsgeräten, die gemeinsam mit dem Kommunikationsnetz eine Datenkommunikationsverbindung aufgebaut haben, kann ein solcher netzseitiger Austausch eine verbesserte Nutzererfahrung beziehungsweise eine verbesserte Netzauslastung gewährleisten. Zum Beispiel kann auch ein Vergleich der Priorisierungsmerkmale von zwei oder mehr parallel ablaufenden Kommunikationsapplikationen im Rahmen des erfindungsgemäßen Verfahrens erfolgen.

Unter einem Kommunikationsgerät sind im Sinne der vorliegenden Erfindung sämtliche Geräte zu verstehen, welche eine Datenkommunikation erlauben. Darunter sind explizit auch sogenannte Festnetzgeräte, also Computer, Tabletts oder Festnetztelefone zu verstehen, welche über ein festes Kabel mit dem Kommunikationsnetz verbunden werden. Die gesamte vorliegende Erfindung bringt jedoch insbesondere Vorteile mit sich, wenn sie für ein Funkkommunikationsgerät mit einem Funkkommunikationsnetz eingesetzt wird. Darunter sind insbesondere Mobilfunknetze und sogenannte W-LAN-Netze in Gebäuden beziehungsweise auf öffentlichen Plätzen zu verstehen. Selbstverständlich können auch Kurzstreckenfunksysteme, wie zum Beispiel ein Bluetoothfunksystem oder eine sogenannte NFC-Schnittstelle (near field communication) im Sinne der vorliegenden Erfindung als eine Kommunikation mit einem Kommunikationsnetz verstanden werden.

Durch die Ausführung eines erfindungsgemäßen Verfahrens wird es nun möglich, die einzelnen Kommunikationsapplikationen zu gewichten beziehungsweise zu bewerten. Entscheidend dabei ist, dass die Priorisierungsmerkmale nicht zwangsläufig fixiert sein müssen, sondern vielmehr zum Beispiel zeitabhängig, ortsabhängig oder nutzungssituationsabhängig auf Basis der jeweiligen Nutzung der Kommunikationsapplikation ausgebildet sein können.

Ein erfindungsgemäßes Verfahren kann auch als sogenannter Session-Manager bezeichnet werden, der wie ein interner Router des Kommunikationsgerätes wirkt. Er priorisiert also die Datenrate beziehungsweise die Kommunikationsverbindungen der einzelnen Kommunikationsapplikationen und kann diese einzelnen Gewichtungen verschieben beziehungsweise anpassen auf Basis des Vergleichs mit wenigstens einem Priorisierungsmerkmal. Nachfolgend wird kurz an einem Beispiel eine entsprechende Durchführung eines Verfahrens erläutert.

Benutzt ein Nutzer eines Kommunikationsgerätes zum Beispiel eine Kommunikationsapplikation in Form eines Internetradios auf seinem Datengerät, so kann dies dazu führen, dass hier als Priorisierung die Qualität der Streamingdienstleistung den entscheidenden Ausschlag für das Priorisierungsmerkmal gibt. Eine Komforteinschränkung bei einem Streamingdienst ist sehr schnell zu erkennen, wenn die Latenz überschritten wird, nämlich die Datenübertragung nur ruckweise beziehungsweise zu langsam erfolgt. Hier erkennt der Nutzer sehr schnell eine Qualitätseinbuße der entsprechenden Kommunikationsverbindung. Laufen parallel Kommunikationsapplikationen, wie zum Beispiel im Hintergrund die Abfrage der E-Mails oder anderer Kurznachrichten, auf dem gleichen Kommunikationsgerät ab, so sind dort zeitliche Verzögerungen, also eine Reduktion der Latenz der Datenübertragung, unkritisch für das Komfortempfinden beziehungsweise das Qualitätsempfinden des Nutzers. Während bei bekannten Lösungen sämtliche Kommunikationsapplikationen, also das Internetradio und der E-Mail-Abruf gleichzeitig mit gleicher Datenrate erfolgen, wird erfindungsgemäß nun eine Priorisierung möglich. Bei dem gewählten Beispiel kann eine entsprechende Datenkontrolleinheit nun einen Vergleich mit einem Priorisierungsmerkmal durchführen und erkennen, dass eine latenzkritische Abhängigkeit bei der Kommunikationsapplikation in Form des Internetradios besteht. Somit wird bei dieser Nutzungssituation das Internetradio als Kommunikationsapplikation mit einem höheren Priorisierungsmerkmal versehen. Dies führt dazu, dass beim Internetradio als Kommunikationsapplikation ein Erhöhen beziehungsweise ein Freigeben der kompletten Datenkommunikation erfolgt, während parallele Kommunikationsapplikationen, wie zum Beispiel das Abrufen von E-Mails oder weiterer Kurznachrichten mit einer reduzierten oder sogar blockierten Datenkommunikation und einem entsprechenden Priorisierungsmerkmal ausgestattet werden.

An dem vorstehenden einfachen Beispiel ist gut zu erkennen, wie durch ein erfindungsgemäßes Verfahren sowohl das Kommunikationsnetz, als auch das Kommunikationsgerät hinsichtlich seiner Nutzungsqualität und seines Nutzungskomforts verbessert werden können. So muss z.B. bei gleichbleibender Netzquantität keine zusätzliche Netzkommunikationsdatenbreite zur Verfügung gestellt werden, um gleichzeitig das Komfortempfinden bei der Nutzung des Kommunikationsgerätes für den Nutzer zu verbessern oder anzuheben.

Erfindungsgemäß ist für das Komfortempfinden beziehungsweise das Qualitätsempfinden für das Kommunikationsgerät und über das Kommunikationsnetz insbesondere die Datenrate beziehungsweise die Latenz der Datenrate ein entscheidendes Kriterium. Unter der Datenrate ist dabei die Bandbreite zu verstehen, wie viele Datenpakete parallel zwischen dem Kommunikationsgerät über die Kommunikationsverbindung und dem Kommunikationsnetz gesendet werden können. Unter der Latenz ist die Zeitdauer dieser einzelnen Datenpakete zu verstehen, die für die Übertragung benötigt wird. Während die Datenbreite für die Gesamtmenge der Daten pro Zeit entscheidend ist, ist die Latenz für sämtliche Kommunikationsapplikationen wichtig, bei welchen Zeitverzögerungen eine Komfortstörung beinhalten würden. Darunter sind insbesondere Telefonie, Videotelefonie und sogenannte Streamingdienste zu verstehen, bei welchen durch audio-visuelle Wahrnehmung der Nutzer sofort eine Latenzverzögerung erkennen würde.

Unter einer Datenkommunikationsanfrage ist zu verstehen, dass eine Kommunikationsapplikation eine entsprechende Datenkommunikationsverbindung aufbauen möchte. Darunter ist auch zu verstehen, dass möglicherweise eine bestehende Datenkommunikationsverbindung geändert werden soll. Insbesondere ist eine erfindungsgemäße und später noch beschriebene Datenkontrolleinheit ausgebildet, das erfindungsgemäße Verfahren kontinuierlich auszuführen, so dass in regelmäßigen Abständen, also quasi kontinuierlich, oder vollständig kontinuierlich überwacht wird, ob die aktuelle Priorisierungssituation anhand der beim letzten Durchgang des Verfahrens erstellten Vergleiche mit Priorisierungsmerkmalen immer noch aktuell ist. Hier ist gut zu erkennen, dass sich über die Nutzungsdauer die Nutzungssituation für die einzelnen Kommunikationsapplikationen beziehungsweise die einzelnen Priorisierungssituationen verändern können. Dies kann zeitabhängig, nutzungsabhängig, ortsabhängig oder auch datumsabhängig geschehen, wie dies später noch näher erläutert wird.

Die Überwachung von Kommunikationsapplikationen, insbesondere aller Kommunikationsapplikationen, auf dem Kommunikationsgerät ist dabei auf die Erkennung einer Datenkommunikationsanfrage ausgelegt. So kann in Intervallen, teilkontinuierlich oder auch kontinuierlich eine Überwachung der Kommunikationsapplikation durchgeführt werden. Diese Überwachung prüft insbesondere die Kommunikationsschnittstellen der Kommunikationsapplikationen auf den Beginn einer Datenübertragung in Form einer Datenkommunikationsanfrage.

Der Vergleich mit dem Priorisierungsmerkmal und insbesondere auch der Ort für die Speicherung des Priorisierungsmerkmals kann dabei im Wesentlichen frei gewählt sein. So kann das Priorisierungsmerkmal bereits Teil der jeweiligen Kommunikationsapplikation sein. Auch kann das Priorisierungsmerkmal als Punkt in einer Prioritätsliste in dem Kommunikationsgerät gespeichert vorliegen. Auch ist es möglich, dass Priorisierungsmerkmale und/oder entsprechende Prioritätslisten netzseitig im Kommunikationsnetz vorhanden sind.

Durch ein erfindungsgemäßes Verfahren wird also sogenannter ungeregelter Datenverkehr, welcher auch als Burst Traffic bezeichnet werden kann, vermindert. Die gefühlte Verbindungsqualität für den Nutzer wird durch die Priorisierung auf die für ihn aktuell entscheidenden Kommunikationsapplikationen fokussiert und damit verbessert. Gleichzeitig kann das Kommunikationsnetz von unnötigen Datenverkehrsspitzen und damit für den Benutzer unmerklichen zeitlichen Lastverteilungen entlastet werden. Nicht zuletzt ist es ein erfindungsgemäßer Vorteil, dass nicht nur ein einzelnes Kommunikationsgerät, sondern eine Vielzahl von Kommunikationsgeräten einem erfindungsgemäßen Verfahren zu Grunde gelegt werden können. Auch hierzu wird nachfolgend ein kurzes Beispiel angegeben.

Sind beispielsweise zwei oder mehr Nutzer mit jeweils einem eigenen Kommunikationsgerät in einem Kommunikationsnetz angemeldet, so laufen Kommunikationsverbindungen zwischen dem Kommunikationsnetz und den einzelnen Kommunikationsapplikationen auf den jeweiligen Kommunikationsgeräten ab. Es kann nun vorkommen, dass einer der Nutzer einen besonders datenintensiven Dienst mit einer entsprechenden Kommunikationsapplikation auf seinem Kommunikationsgerät startet. Dies kann nun mit einem erfindungsgemäßen Verfahren dahingehend abgebildet werden, dass eine Verschiebung der zur Verfügung gestellten Bandbreite oder der notwendigen Latenz auf den jeweils mit der entsprechenden Datenanforderungsspitze versehenen Nutzer und sein Kommunikationsgerät verschoben wird. Das erlaubt es also, bei bestehender Bandbreite in einem Netz auch bei einer Mehrnutzersituation durch ein erfindungsgemäßes Verfahren die gefühlte Verbindungsqualität für alle Nutzer dieses Kommunikationsnetzes zu verbessern. Beispielsweise kann bei einem Streamingdienst, den einer der Nutzer auf seinem Kommunikationsgerät nutzt, abgesehen werden, zu welchem Zeitpunkt er eine entsprechende hohe Datenspitze für seine Kommunikationsverbindung benötigt, zum Beispiel weil ein stark bewegtes Bild im Streaming übertragen werden muss. Da hier üblicherweise auch Latenzprobleme zu berücksichtigen sind, kann eine entsprechende Anpassung oder zeitliche Pufferung vorher oder nachher für dieses Kommunikationsgerät oder für die parallel im gleichen Kommunikationsnetz angemeldeten Kommunikationsgeräte erfolgen.

Ein erfindungsgemäßes Verfahren kann selbstverständlich die Kommunikation zwischen unterschiedlichsten Kommunikationsgeräten gewährleisten beziehungsweise optimieren. Darunter fallen insbesondere Kommunikationen zwischen einem Client und einem Server, zwischen einem Server und einem Client sowie selbstverständlich auch eine Kommunikation zwischen zwei Servern.

Ein erfindungsgemäßes Verfahren lässt sich dahingehend weiterbilden, dass der Vergleich der aktiven Kommunikationsapplikation mit einem Priorisierungsmerkmal der Kommunikationsapplikation und/oder des Kommunikationsnetzes, insbesondere zumindest einem der folgenden Priorisierungsmerkmale durchgeführt wird:
- Nutzungsstatus der Kommunikationsapplikation,
- Anordnung der Kommunikationsapplikation auf einer Anzeigevorrichtung des Kommunikationsgerätes,
- Wichtigkeit der Kommunikationsapplikation für den Nutzer und/oder für das Kommunikationsgerät,
- aktueller Status insbesondere Lastsituation des Kommunikationsnetzes,
- aktuelle Uhrzeit,
- aktuelles Datum,
- Ort des Kommunikationsgeräts,
- Inhalt und Art der Daten der Datenkommunikationsanfrage,
- Nutzerspezifische Informationen, insbesondere Tarifoption des Nutzers.

Bei der voranstehenden Aufzählung handelt es sich um eine nicht abschließende Liste. Unter dem Nutzungsstatus der Kommunikationsapplikation ist zum Beispiel eine Unterscheidung zwischen aktiver und passiver Nutzung zu verstehen. So kann der Nutzungsstatus zum Beispiel mit dem Zeitpunkt des Öffnens beziehungsweise Startens der Kommunikationsapplikation zusammenfallen. Eine automatische Öffnung einer Session ohne Nutzeraktivität kann dementsprechend als passive Nutzung bezeichnet werden, während das aktive Auswählen und Starten einer Kommunikationsapplikation eine aktive Nutzung darstellen kann. Unter der Anordnung der Kommunikationsapplikation auf einer Anzeigevorrichtung des Kommunikationsgerätes ist zu verstehen, dass diese Kommunikationsapplikation sich im Vordergrund auf der Anzeigevorrichtung befindet. Eine Kommunikationsapplikation, welche sich im Vordergrund einer Anzeigevorrichtung des Kommunikationsgerätes befindet, ist üblicherweise die aktuell aktiv bearbeitete beziehungsweise benützte Kommunikationsapplikation des Nutzers. Mögliche Probleme hinsichtlich Verbindungsqualität oder verschlechterter Kommunikationsverbindung werden hier besonders intensiv beziehungsweise sofort wahrgenommen. Dementsprechend kann diese Information über die Vordergründigkeit der Kommunikationsapplikation für eine Erhöhung der Priorität und ein entsprechendes Priorisierungsmerkmal wirken. Selbstverständlich kann auch die Wichtigkeit der Kommunikationsapplikation explizit eingegeben werden. So kann der Benutzer eigene Listen erstellen, um eine entsprechende Wichtigkeit der Kommunikationsapplikation für ihn zu definieren. Er kann zum Beispiel die Wichtigkeit von Kurznachrichten über die von E-Mails setzen oder umgekehrt. Auch netzseitig oder geräteseitig ist es möglich, einzelne Kommunikationsapplikationen mit höherer Priorität oder niedrigerer Priorität auszustatten. Dabei ist darauf hinzuweisen, dass grundsätzlich bei der vorliegenden Erfindung jedes Priorisierungsmerkmal eine Information aufweist, die im Vergleich zu anderen Priorisierungsmerkmalen eine Gewichtung beziehungsweise eine Wertung zulässt. So kann beispielsweise ein Priorisierungsmerkmal eine Abfolge von Ziffern sein beziehungsweise eine Abfolge von Buchstaben, so dass eindeutig definiert ist, welches Priorisierungsmerkmal höher und welches niedriger einzuschätzen ist. Beispielsweise kann eine einfache Prioritätsliste zur Verfügung gestellt werden, welche von oben nach unten mit absteigender Wichtigkeit versehen ist. Selbstverständlich ist im Sinne der vorliegenden Erfindung auch eine doppelte Priorisierung denkbar, so dass verschiedene Kommunikationsapplikationen gleiche Wertigkeit und damit gleiche Priorität durch entsprechende Priorisierungsmerkmale zugewiesen bekommen haben. Solche Prioritätskonflikte können dadurch gelöst werden, dass für diese beiden Kommunikationsapplikationen die gleiche Datenrate beziehungsweise das gleiche Freigeben, Reduzieren oder Blockieren durchgeführt wird. Als aktueller Status insbesondere einer Lastsituation des Kommunikationsnetzes ist insbesondere die aktuell genutzte Bandbreite beziehungsweise die genutzte und zur Verfügung gestellte Latenz für Datenpakete vorhanden. Hier kann eine explizite Messung oder eine Abfrage vom entsprechenden Kommunikationsnetz durchgeführt werden. Auch die aktuelle Uhrzeit, das aktuelle Datum oder der Ort des Kommunikationsgerätes können direkten oder indirekten Einfluss auf die Wichtigkeit und damit das Priorisierungsmerkmal haben. So kann beispielsweise der Ort des Kommunikationsgerätes auf eine statische Position oder auf eine bewegte Position hindeuten. Bei bewegten Positionen kann eine höhere Priorisierung zum Beispiel für Navigationsapplikationen als Kommunikationsapplikationen zugewiesen werden als bei statischen Situationen. Auch Zeit und Datum sind für eine Einflussnahme auf das Priorisierungsmerkmal denkbar. So kann beispielsweise zur Mittagszeit, zum Nachmittag oder abends eine unterschiedliche Priorisierung auf entsprechende Kommunikationsapplikationen gelegt werden. Der Inhalt und die Art der Datenkommunikationsanfrage sind selbstverständlich auch Einflussmerkmale, die möglicherweise in dem Priorisierungsmerkmal Eingang finden können. So ist hier zu unterscheiden insbesondere hinsichtlich der Anfälligkeit für die Bandbreite und/oder die Latenz der jeweiligen Kommunikationsapplikation. Werden Sprachdaten oder Streamingdienste angewendet, so ist hier eine hohe Latenzabhängigkeit gegeben, so dass eine entsprechende Erhöhung des Priorisierungsmerkmals mit dieser Situation einhergehen kann. Selbstverständlich kann auch eine nutzerspezifische Information, zum Beispiel aus dem IMSI-Code, für eine Information über den Nutzer verwendet werden. Dabei kann insbesondere die entsprechende Tarifoption des Nutzers für eine entsprechende Priorisierung einzelner Kommunikationsapplikationen dienen.

Vorteilhaft ist es ebenfalls, wenn bei einem erfindungsgemäßen Verfahren zumindest einmalig der Schritt einer Zuweisung eines Priorisierungsmerkmals zu einer Kommunikationsapplikation durch den Nutzer des Kommunikationsgerätes und/oder den Hersteller des Kommunikationsgerätes und/oder den Betreiber des Kommunikationsnetzes durchgeführt wird. Hier ist also zu erkennen, dass die Priorisierungsmerkmale unterschiedliche Herkunftsorte aufweisen können. Auch können die Priorisierungsmerkmale nicht nur statisch, sondern auch dynamisch ausgebildet sein und insbesondere Funktionen zum Beispiel der im voranstehenden Absatz genannten Einflussgrößen beinhalten. So ist es beispielsweise möglich, dass die Nutzer sowohl statische als auch dynamische und damit abhängige Wichtigkeiten als Priorisierungsmerkmale für die einzelnen Kommunikationsapplikationen hinterlegen. Ziel ist es dabei, dass die Priorisierungsmerkmale den Wunsch des Nutzers für die Kommunikationsapplikation oder das Kommunikationsgerät beziehungsweise netzseitig eine Stabilität für den Betreiber des Kommunikationsnetzes mit höherer Sicherheit erfüllen können.

Vorteilhaft ist es ebenfalls, wenn bei einem erfindungsgemäßen Verfahren die Schritte für wenigstens zwei aktive Kommunikationsapplikationen, insbesondere für alle aktiven Kommunikationsapplikationen, durchgeführt werden. Dabei sind selbstverständlich, wie bereits erläutert worden ist, auch parallele Priorisierungen denkbar. Ein solcher Priorisierungskonflikt wird dahingehend gelöst, dass Kommunikationsapplikationen zu einem Zeitpunkt mit gleichwertigem Priorisierungsmerkmal mit gleicher Weise behandelt werden.

Somit erfolgt für gleichwertige Kommunikationsapplikationen also eine gleiche Rangordnung mit entsprechender Freigabe, Reduktion oder Blockade der zugehörigen Kommunikationsverbindung.

Vorteilhaft ist es darüber hinaus, wenn bei einem erfindungsgemäßen Verfahren für den Schritt des Vergleichs der aktiven Kommunikationsapplikation ein Priorisierungsmerkmal zugeordnet ist oder wird und das zugeordnete Priorisierungsmerkmal mit einem Priorisierungsmerkmal einer weiteren aktiven Kommunikationsapplikation und/oder aus einer Prioritätsliste verglichen wird. Der Vergleich gemäß dem erfindungsgemäßen Verfahren führt also dazu, dass eine explizite Wertigkeit zum Beispiel aus einer bestehenden Prioritätsliste herausgezogen werden kann. Selbstverständlich ist jedoch auch ein dynamisches Vergleichen denkbar, bei welchem aktiv und für den jeweiligen Nutzungszeitraum spezifisch eine Rangfolge für alle aktiven Kommunikationsapplikationen erstellt wird. Ein erfindungsgemäßes Verfahren ist somit flexibel auf im Wesentlichen jede vorstellbare Nutzungssituation des Kommunikationsgerätes anwendbar. Selbstverständlich kann die Durchführung dieses Vergleichs sowohl innerhalb des Kommunikationsgerätes, als auch netzseitig innerhalb des Kommunikationsnetzes stattfinden.

Vorteilhaft ist es darüber hinaus, wenn bei einem erfindungsgemäßen Verfahren für den Schritt des Vergleichs eine Abfrage der aktuellen Anzeige des Kommunikationsgeräts erfolgt, wobei die Datenkommunikation freigegeben wird, wenn die aktive Kommunikationsapplikation aktuell auf der Anzeige angezeigt wird. Hierbei handelt es sich um ein besonders wichtiges Entscheidungskriterium für die Priorisierung mit Hilfe von Priorisierungsmerkmalen. Insbesondere Kommunikationsapplikationen, welche im Vordergrund angeordnet sind und dementsprechend aktuell mit höchster Wahrscheinlichkeit von dem Nutzer des Kommunikationsgerätes benutzt werden, werden hier mit einem hohen beziehungsweise insbesondere mit dem höchsten Priorisierungsmerkmal versehen.

Ebenfalls Gegenstand der vorliegenden Erfindung ist ein Computerprogrammprodukt zur Ausführung auf einer Rechnereinheit und gespeichert auf einem computerlesbaren Medium. Das Computerprogrammprodukt weist die folgenden Merkmale auf:
- computerlesbare Programmmittel, welche die Recheneinheit veranlassen, Kommunikationsapplikationen, insbesondere alle Kommunikationsapplikationen auf dem Kommunikationsgerät zur überwachen,
- computerlesbare Programmmittel, welche die Recheneinheit veranlassen, eine Datenkommunikationsanfrage einer aktiven Kommunikationsapplikation zu erkennen,
- computerlesbare Programmmittel, welche die Recheneinheit veranlassen, einen Vergleich der aktiven Kommunikationsapplikation mit wenigstens einem Priorisierungsmerkmal durchzuführen,
- computerlesbare Programmmittel, welche die Recheneinheit veranlassen, eine Datenkommunikation der aktiven Kommunikationsapplikation auf Basis des Ergebnisses des Vergleichs freizugeben, zu reduzieren, zu bevorzugen, zu beschleunigen, zurückzuhalten oder zu blockieren.

Ein erfindungsgemäßes Computerprogrammprodukt dient insbesondere zur Ausführung eines erfindungsgemäßen Verfahrens. Dementsprechend bringt ein erfindungsgemäßes Computerprogrammprodukt die gleichen Vorteile mit sich, wie sie ausführlich mit Bezug auf ein erfindungsgemäßes Verfahren erläutert worden sind.

Ein weiterer Gegenstand der vorliegenden Erfindung ist eine Datenkontrolleinheit für ein Kommunikationsgerät, insbesondere zur Ausführung eines erfindungsgemäßen Verfahrens. Die erfindungsgemäße Datenkontrolleinheit weist eine Überwachungsschnittstelle für die Überwachung aller Kommunikationsapplikationen des Kommunikationsgeräts und die Erkennung einer Datenkommunikationsanfrage einer aktiven Kommunikationsapplikation auf. Weiter ist eine Vergleichseinheit für einen Vergleich der aktiven Kommunikationsapplikation mit wenigstens einem Priorisierungsmerkmal vorgesehen. Darüber hinaus weist die Datenkontrolleinheit eine Kontrolleinheit für ein Freigeben, ein Reduzieren oder ein Blockieren der Datenkommunikation der aktiven Kommunikationsapplikation auf Basis des Ergebnisses des Vergleichs auf. Durch die Verwendung eines erfindungsgemäßen Verfahrens bringt eine erfindungsgemäße Datenkontrolleinheit die gleichen Vorteile mit sich, wie sie ausführlich mit Bezug auf ein erfindungsgemäßes Verfahren erläutert worden sind.

Eine erfindungsgemäße Datenkontrolleinheit lässt sich dahingehend weiterbilden, dass diese wenigstens teilweise, insbesondere vollständig, in dem Betriebssystem des Kommunikationsgerätes implementiert ist. Insbesondere bei einem Neukauf beziehungsweise beim Update auf ein neues Betriebssystem lässt sich damit ein Kommunikationsgerät mit einer erfindungsgemäßen Funktionalität ausstatten. Damit wird die tiefste Ebene innerhalb des Kommunikationsgerätes erreicht, so dass der beste Eingriff in den Datenverkehr möglich wird. Auch ist eine Verankerung im Betriebssystem der beste Schutz, um eine Sicherung gegen unerwünschte Veränderung zur Verfügung stellen zu können.

Auch ist es möglich, dass bei einer erfindungsgemäßen Datenkontrolleinheit diese wenigstens teilweise, insbesondere vollständig, als Computerprogrammprodukt auf dem Kommunikationsgerät, insbesondere in einer Recheneinheit, installiert ist. Dies führt dazu, dass eine leichtere nachträgliche Anpassung erfolgen kann. Insbesondere kann eine Vorabinstallation durch den Hersteller des Kommunikationsgerätes oder den entsprechenden Provider des Kommunikationsnetzes gewährleistet werden. Es ist möglich, eine Anpassung der jeweiligen Situation des Kommunikationsgerätes an den jeweiligen Provider zu erlauben.

Ein weiterer Vorteil ist es, wenn bei einer erfindungsgemäßen Datenkontrolleinheit diese wenigstens teilweise, insbesondere vollständig, als downloadbares Computerprogramm, insbesondere als App, ausgebildet ist. Somit ist auch ein nachträgliches und vor allem aktiv durch den Nutzer getriggertes Nachrüsten eines Kommunikationsgerätes mit der erfindungsgemäßen Funktionalität denkbar. Neben einem Start dieser Nachrüstung durch den Nutzer ist selbstverständlich auch eine Startmöglichkeit für den jeweiligen Provider des Kommunikationsnetzes denkbar.

Vorteilhaft ist es ebenfalls, wenn bei einer erfindungsgemäßen Datenkontrolleinheit diese wenigstens auf dem Kommunikationsgerät und teilweise im Kommunikationsnetz implementiert ist. Darunter ist zu verstehen, dass eine Kombination unterschiedlicher Positionen die erfindungsgemäße Qualität zur Verfügung stellen kann. Selbstverständlich kann die Datenkontrolleinheit auch komplett im Kommunikationsnetz anordnenbar sein. Erfindungsgemäß kann diese Teilung im Wesentlichen frei vorgenommen werden, so dass je nach Anordnung der Datenkontrolleinheit die gleiche Funktionalität für das Gesamtsystem aus Kommunikationsnetz und Kommunikationsgerät ermöglicht werden kann.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen schematisch:
- Fig. 1: eine erste Ausführungsform eines Kommunikationsnetzes mit erfindungsgemäßen Kommunikationsgeräten,
- Fig. 2: eine Ausführungsform eines erfindungsgemäßen Verfahrens,
- Fig. 3: eine weitere Ausführungsform eines erfindungsgemäßen Verfahrens und
- Fig. 4: eine weitere Ausführungsform eines erfindungsgemäßen Verfahrens.

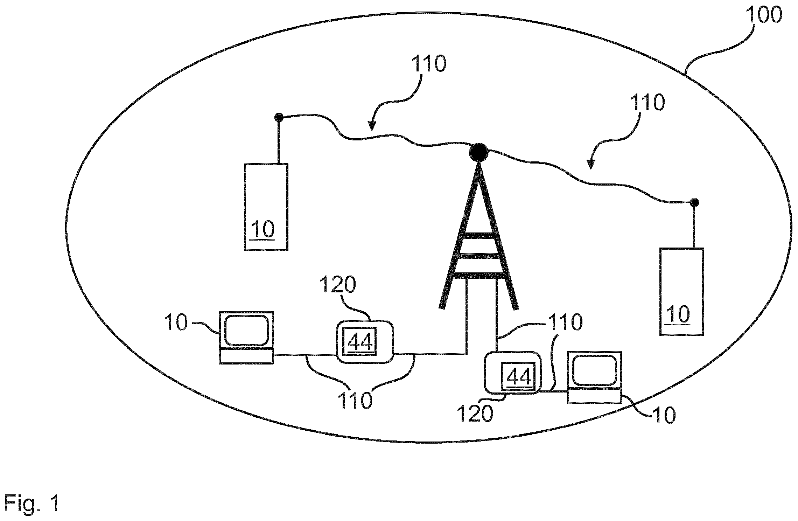

In Fig. 1 ist schematisch dargestellt, wie sowohl mobile Kommunikationsgeräte 10 in Form von Mobilfunkgeräten und stationäre Kommunikationsgeräte 10 in Form von Computern entsprechende Kommunikationsverbindungen 110 mit einem Kommunikationsnetz 100 aufbauen können. Bei der stationären Situation sind Vermittlungsvorrichtungen 120 in Form eines sogenannten Switch vorgesehen, in welchem eine entsprechende Vergleichseinheit 44 einer Datenkontrolleinheit 40 (nicht dargestellt) vorhanden ist. In allen Fällen werden Kommunikationsverbindungen 110 aufgebaut, um Daten auszutauschen zwischen den Kommunikationsgeräten 10 und dem Kommunikationsnetz 100.

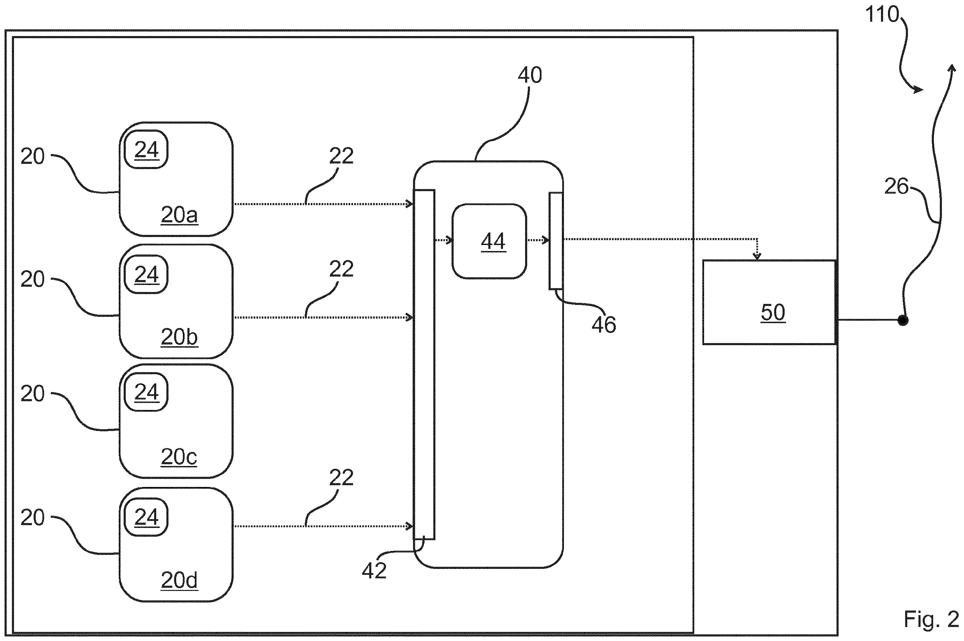

Fig. 2 zeigt schematisch, wie ein erfindungsgemäßes Verfahren ablaufen kann. In einem Kommunikationsgerät 10 ist hier eine Möglichkeit gegeben, über eine Kommunikationsschnittstelle 50 Kontakt in datenkommunizierender Weise mit dem Kommunikationsnetz 100 über eine Kommunikationsverbindung 110 aufzubauen. Auf dem Kommunikationsgerät 10 sind eine Vielzahl von Kommunikationsapplikationen 20, nämlich die Kommunikationsapplikationen 20a, 20b, 20c und 20d angeordnet und installiert.

Insgesamt drei dieser aktuell installierten Kommunikationsapplikationen 20, nämlich die Kommunikationsapplikationen 20a, 20b und 20d stellen zum parallelen Zeitpunkt eine Datenkommunikationsanfrage 22. Diese wird von einer Datenkontrolleinheit 40 erkannt, so dass nunmehr ein Vergleich der jeweiligen Priorisierungsmerkmale 24 der Kommunikationsapplikationen 20a, 20b und 20d in einer Vergleichseinheit 44 durchgeführt wird. Die Kontrolleinheit 46 kann nun auf Ergebnis dieses Vergleiches eine Priorisierung der einzelnen Datenkommunikationen 26 über die Kommunikationsschnittstelle 50 gewährleisten. Ist beispielsweise die Kommunikationsapplikation 20b ein Streamingdienst, so wird dieser das mit hoher Wahrscheinlichkeit höchste Priorisierungsmerkmal 24 aufweisen. Die anderen Kommunikationsapplikationen 20a und 20d werden dementsprechend hinsichtlich der angefragten Datenkommunikation 26 reduziert oder sogar vollständig blockiert. Bei dieser Ausführungsform sind die Priorisierungsmerkmale 24 direkt entweder durch den Nutzer oder das Kommunikationsgerät 10 den einzelnen Kommunikationsapplikationen 20 zugewiesen. Die Priorisierungsmerkmale 24 können dabei eine Funktion unterschiedlicher Eingangsgrößen sein, so dass je nach Zeitsituation, Nutzungssituation, Korrelation zu den anderen aktiven Kommunikationsapplikationen 20 oder anderen Parametern eine Veränderung der einzelnen Priorisierungsmerkmale 24 auf Basis dieser dynamischen Funktionen denkbar ist.

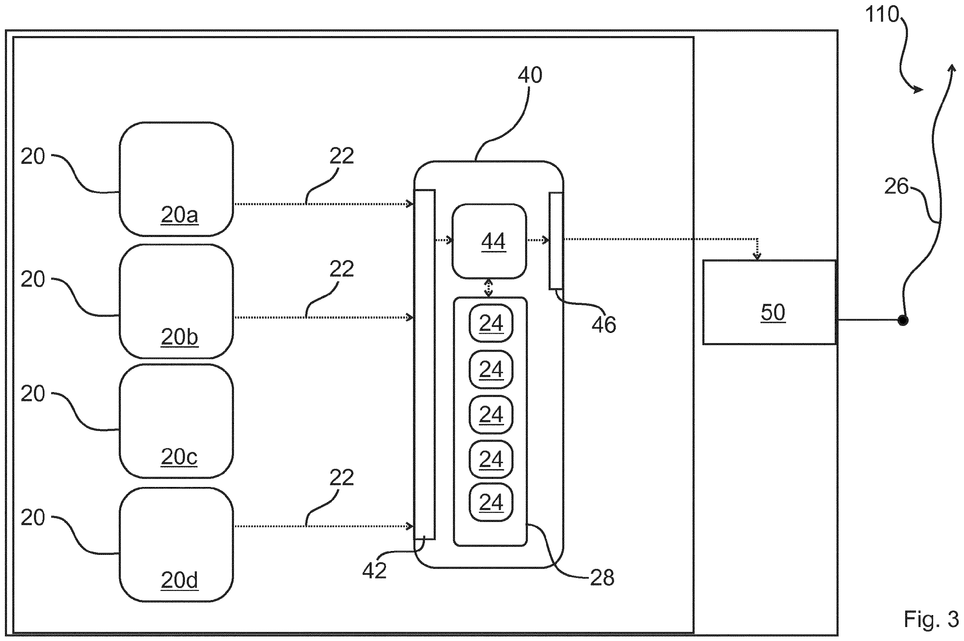

Fig. 3 zeigt eine Möglichkeit, bei welcher die Priorisierungsmerkmale 24 aus den einzelnen Kommunikationsapplikationen ausgelagert sind. Hier ist eine Prioritätsliste 28 als Teil der Datenkontrolleinheit 40 vorgesehen. Über die Überwachungsschnittstelle 42 wird auch hier wieder die Datenkommunikationsanfrage 22 der Kommunikationsapplikationen 20a, 20b und 20d erkannt. Auch hier kann über eine Priorisierungsvergleichsmöglichkeit mit der Prioritätsliste 28 nun eine Blockade, ein Freigeben oder Reduzieren der gewünschten Datenkommunikation 26 über die Kommunikationsschnittstelle 50 erfolgen. Die Funktion ist identisch mit der Beschriebenen zu Fig. 2.

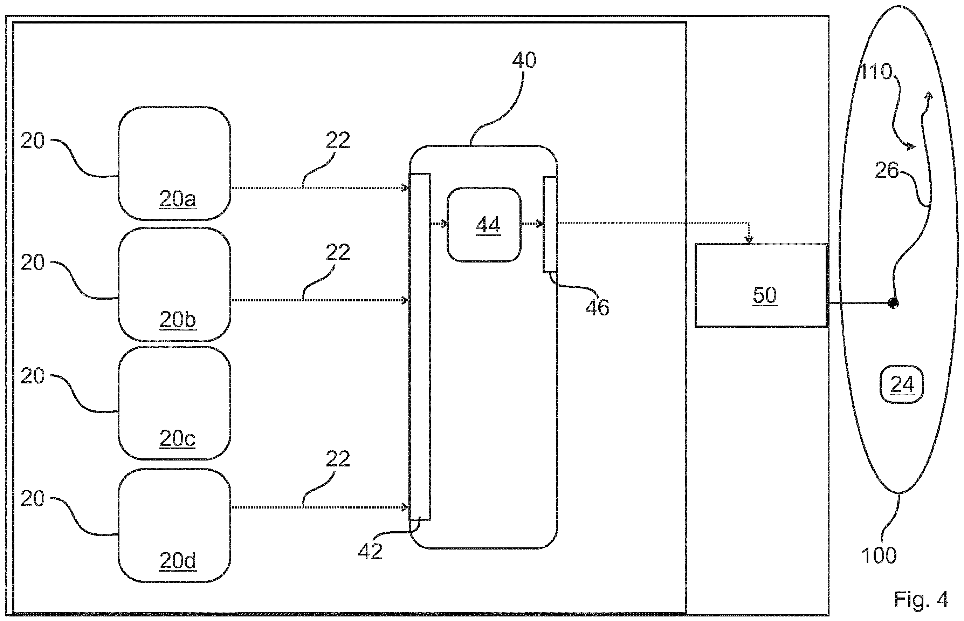

Fig. 4 zeigt die Möglichkeit, das Priorisierungsmerkmal 24 beziehungsweise weitere Priorisierungsmerkmale 24 in das Kommunikationsnetz 100 auszulagern. Hier findet zwar grundsätzlich ein Vergleich in der Vergleichseinheit 44 statt, jedoch erfolgt die Priorisierung durch die Priorisierungsmerkmale 24 komplett durch das Kommunikationsnetz 100. Somit ist der Zugriff insbesondere für den Betreiber des Kommunikationsnetzes sehr einfach und vor allem in sicherer Weise möglich.

Selbstverständlich können die Ausführungsformen und vor allem die Orte und Zuweisungsmöglichkeiten für die Priorisierungsmerkmale 24 gemäß den Fig. 2, 3 und 4 auch untereinander oder mit anderen alternativen Lösungen kombiniert werden.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichen

- 10: Kommunikationsgerät
- 20: Kommunikationsapplikation
- 20a: Kommunikationsapplikation
- 20b: Kommunikationsapplikation
- 20c: Kommunikationsapplikation
- 20d: Kommunikationsapplikation
- 22: Datenkommunikationsanfrage
- 24: Priorisierungsmerkmal
- 26: Datenkommunikation
- 28: Prioritätsliste
- 30: Recheneinheit
- 40: Datenkontrolleinheit
- 42: Überwachungsschnittstelle
- 44: Vergleichseinheit
- 46: Kontrolleinheit
- 50: Kommunikationsschnittstelle

- 100: Kommunikationsnetz
- 110: Kommunikationsverbindung
- 120: Vermittlungsvorrichtung

## Patentansprüche

1. Verfahren für die Kontrolle eines Datenverkehrs zwischen einem Kommunikationsgerät (10) und einem Kommunikationsnetz (100) über eine Kommunikationsverbindung (110), aufweisend die folgenden Schritte:
- Überwachen von Kommunikationsapplikationen (20) auf dem Kommunikationsgerät (10),
- Erkennen einer Datenkommunikationsanfrage (22) einer aktiven Kommunikationsapplikation (20),
- Vergleich der aktiven Kommunikationsapplikation (20) mit wenigstens einem Priorisierungsmerkmal (24),
- Freigeben, reduzieren, bevorzugen, beschleunigen oder blockieren einer Datenkommunikation (26) der aktiven Kommunikationsapplikation (20) auf Basis des Ergebnisses des Vergleichs,
**dadurch gekennzeichnet, dass** für den Schritt des Vergleichs eine Abfrage der aktuellen Anzeige des Kommunikationsgeräts (10) erfolgt, wobei die Datenkommunikation (26) freigegeben wird, wenn die aktive Kommunikationsapplikation (20) aktuell auf der Anzeige angezeigt wird, und wobei der Vergleich der aktiven Kommunikationsapplikation (20) mit dem Priorisierungsmerkmal (24) der Kommunikationsapplikation (20) und/oder des Kommunikationsnetzes (100) zumindest mit dem Priorisierungsmerkmal (24) Ort des Kommunikationsgeräts (10) durchgeführt wird.

2. Verfahren nach Anspruch 1, **dadurch gekennzeichnet, dass** der Vergleich der aktiven Kommunikationsapplikation (20) mit dem Priorisierungsmerkmal (24) der Kommunikationsapplikation (20) und/oder des Kommunikationsnetzes (100), aus zumindest einem der folgenden Priorisierungsmerkmale (24), durchgeführt wird:
- Nutzungsstatus der Kommunikationsapplikation (20)
- Anordnung der Kommunikationsapplikation (20) auf einer Anzeigevorrichtung des Kommunikationsgeräts (10)
- Wichtigkeit der Kommunikationsapplikation (20) für den Nutzer und/oder für das Kommunikationsgerät (10)
- Aktueller Status des Kommunikationsnetzes (100)
- Aktuelle Uhrzeit
- Aktuelles Datum
- Inhalt und Art der Daten der Datenkommunikationsanfrage (22)
- Nutzerspezifische Informationen des Nutzers

3. Verfahren nach einem der vorangegangenen Ansprüche, **dadurch gekennzeichnet, dass** zumindest einmalig der Schritt einer Zuweisung des Priorisierungsmerkmals (24) zu einer Kommunikationsapplikation (20) durch den Nutzer des Kommunikationsgeräts (10) und/oder den Hersteller des Kommunikationsgeräts (10) und/oder den Betreiber des Kommunikationsnetzes (100) durchgeführt wird.

4. Verfahren nach einem der vorangegangenen Ansprüche, **dadurch gekennzeichnet, dass** die Schritte für wenigstens zwei aktive Kommunikationsapplikationen (20) durchgeführt werden.

5. Verfahren nach einem der vorangegangenen Ansprüche, **dadurch gekennzeichnet, dass** für den Schritt des Vergleichs der aktiven Kommunikationsapplikation (20) ein Priorisierungsmerkmal (24) zugeordnet ist oder wird und das zugeordnete Priorisierungsmerkmal (24) mit wenigstens einem Priorisierungsmerkmal (24) einer weiteren aktiven Kommunikationsapplikation (20) und/oder aus einer Prioritätsliste (28) verglichen wird.

6. Computerprogramprodukt zur Ausführung auf einer Recheneinheit (30) und gespeichert auf einem computerlesbaren Medium, aufweisend:
- Computerlesbare Programmmittel, welche die Recheneinheit (30) veranlassen Kommunikationsapplikationen (20) auf einem Kommunikationsgerät (10) zu überwachen,
- Computerlesbare Programmmittel, welche die Recheneinheit (30) veranlassen eine Datenkommunikationsanfrage (22) einer aktiven Kommunikationsapplikation (20) zu erkennen,
- Computerlesbare Programmmittel, welche die Recheneinheit (30) veranlassen einen Vergleich der aktiven Kommunikationsapplikation (20) mit wenigstens einem Priorisierungsmerkmal (24) durchzuführen,
- Computerlesbare Programmmittel, welche die Recheneinheit (30) veranlassen eine Datenkommunikation (26) der aktiven Kommunikationsapplikation (20) auf Basis des Ergebnisses des Vergleichs freizugeben, zu reduzieren, zu bevorzugen, zu beschleunigen, zurückzuhalten oder zu blockieren, **dadurch gekennzeichnet, dass** für den Schritt des Vergleichs eine Abfrage der aktuellen Anzeige des Kommunikationsgeräts (10) erfolgt, wobei die Datenkommunikation (26) freigegeben wird, wenn die aktive Kommunikationsapplikation (20) aktuell auf der Anzeige angezeigt wird, und wobei der Vergleich der aktiven Kommunikationsapplikation (20) mit dem Priorisierungsmerkmal (24) der Kommunikationsapplikation (20) und/oder des Kommunikationsnetzes (100) zumindest mit dem Priorisierungsmerkmal (24) Ort des Kommunikationsgeräts (10) durchgeführt wird.

7. Datenkontrolleinheit (40) für ein Kommunikationsgerät (10), für die Ausführung aller Schritte des Verfahrens mit den Merkmalen eines der Ansprüche 1 bis 5, aufweisend eine Überwachungsschnittstelle (42) für die Überwachung von Kommunikationsapplikationen (20) auf dem Kommunikationsgerät (10) und die Erkennung einer Datenkommunikationsanfrage (22) einer aktiven Kommunikationsapplikation (20), eine Vergleichseinheit (44) für einen Vergleich der aktiven Kommunikationsapplikation (20) mit wenigstens einem Priorisierungsmerkmal (24) und eine Kontrolleinheit (46) für ein Freigeben, ein Reduzieren, ein Bevorzugen, ein Beschleunigen oder ein Blockieren der Datenkommunikation (26) der aktiven Kommunikationsapplikation (20) auf Basis des Ergebnisses des Vergleichs.

8. Datenkontrolleinheit (40) nach Anspruch 7, **dadurch gekennzeichnet, dass** diese wenigstens teilweise in dem Betriebssystem des Kommunikationsgeräts (10) implementiert ist.

9. Datenkontrolleinheit (10) nach einem der Ansprüche 7 oder 8, **dadurch gekennzeichnet, dass** diese wenigstens teilweise als Computerprogrammprodukt auf dem Kommunikationsgerät (10) installiert ist.

10. Datenkontrolleinheit (10) nach einem der Ansprüche 7 bis 109 **dadurch gekennzeichnet, dass** diese wenigstens teilweise als downloadbares Computerprogrammprodukt ausgebildet ist.

11. Datenkontrolleinheit (40) nach einem der Ansprüche 7 bis 9, **dadurch gekennzeichnet, dass** diese wenigstens teilweise auf dem Kommunikationsgerät (10) und teilweise im Kommunikationsnetz (100) implementiert ist.

## Claims

1. Method for controlling a data traffic between a communication device (10) and a communication network (100) via a communication link (110) comprising the following steps:
- supervision of communication applications (20) on the communication device (10),
- recognizing a data communication request (22) of an active communication application (20),
- comparison of the active communication application (20) with at least one prioritizing feature (24),
- unblock, reduce, prefer, accelerate or block a data communication (26) of the active communication application (20) on the basis of the result of the comparison,
**characterized in that** a request for the current display of the communication device (10) is made for the step of the comparison, wherein the data communication (26) is unblocked when the active communication application (20) is currently displayed on the display, and wherein the comparison of the active communication application (20) is carried out with the prioritizing characteristic (24) of the communication application (20) and/or of the communication network (100) at least with the prioritizing feature (24) location of the communication device (10).

2. Method according to claim 1, **characterized in that** the comparison of the active communication application (20) with the prioritizing feature (24) of the communication application (20) and/or the communication network (100) is performed from at least one of the following prioritizing features (24):
- usage status of the communication application (20)
- arrangement of the communication application (20) on a display device of the communication device (10)
- importance of the communication application (20) for the user and/or for the communication device (10)
- current status of the communication network (100)
- current time
- current date
- the content and nature of the data in the data communication request (22)
- user-specific information of the user

3. Method according to one of the above claims, **characterized in that** the step of assigning the prioritization feature (24) to a communication application (20) is carried out at least once by the user of the communication device (10) and/or the manufacturer of the communication device (10) and/or the operator of the communication network (100).

4. Method according to one of the preceding claims, **characterized in that** the steps are carried out for at least two active communication applications (20).

5. Method according to one of the preceding claims, **characterized in that** for the step of comparing the active communication application (20) a prioritization feature (24) is or will be assigned and the assigned prioritization feature (24) is compared to at least one prioritization feature (24) of another active communication application (20) and/or from a priority list (28).

6. A computer program product for execution on a computing unit (30) and stored on a computer-readable medium, comprising:
- computer-readable program means causing the processing unit (30) to monitor communication applications (20) on a communication device (10),
- computer-readable program means which cause the processing unit (30) to recognize a data communication request (22) of an active communication application (20),
- computer-readable program means which cause the computing unit (30) to compare the active communication application (20) with at least one prioritizing feature (24),
- computer-readable program means causing the computing unit (30) to unblock, reduce, prefer, accelerate, hold back or block data communication (26) of the active communication application (20) based on the result of the comparison,
**characterized in that** for the step of the comparison, a request for the current display of the communication device (10) is made, wherein the data communication (26) is unblocked when the active communication application (20) is currently displayed on the display, and wherein the comparison of the active communication application (20) is performed with the prioritization feature (24) of the communication application (20) and/or the communication network (100) with at least the prioritization feature (24) location of the communication device (10).

7. A data control unit (40) for a communication device (10) for performing all steps of the method having the characteristics of one of the claims 1 to 5, comprising a monitoring interface (42) for monitoring communication applications (20) on the communication device (10) and detecting a data communication request (22) of an active communication application (20), a comparison unit (44) for comparing the active communication application (20) with at least one prioritization feature (24) and a control unit (46) for unblocking, reducing, preferring, accelerating or blocking the data communication (26) of the active communication application (20) based on the result of the comparison.

8. Data control unit (40) according to claim 7, **characterized in that** it is implemented at least partially in the operating system of the communication device (10).

9. Data control unit (10) according to one of claims 7 or 8, **characterized in that** it is at least partially installed as a computer program product on the communication device (10).

10. Data control unit (10) according to one of claims 7 to 9, **characterized in that** it is at least partially designed as a downloadable computer program product.

11. Data control unit (40) according to one of claims 7 to 9, **characterized in that** it is implemented at least partially on the communication device (10) and partially in the communication network (100).

## Revendications

1. Procédé pour le contrôle d'un trafic de données entre un appareil de communication (10) et un réseau de communication (100) via une liaison de communication (110), présentant les étapes suivantes :
- la surveillance d'applications de communication (20) sur l'appareil de communication (10),
- la reconnaissance d'une requête de communication de données (22) d'une application de communication active (20),
- la comparaison de l'application de communication active (20) avec au moins une caractéristique de priorisation (24),
- la libération, la réduction, la préférence, l'accélération ou le blocage d'une communication de données (26) de l'application de communication active (20) sur la base du résultat de la comparaison,
**caractérisé en ce que** pour l'étape de comparaison, une requête de l'affichage actuel de l'appareil de communication (10) est effectuée, dans lequel la communication de données (26) est libérée lorsque l'application de communication active (20) est en cours d'affichage sur l'affichage, et dans lequel la comparaison de l'application de communication active (20) est réalisée avec la caractéristique de priorisation (24) de l'application de communication (20) et/ou du réseau de communication (100) au moins avec la caractéristique de priorisation (24) lieu de l'appareil de communication (10).

2. Procédé selon la revendication 1, **caractérisé en ce que** la comparaison de l'application de communication active (20) avec la caractéristique de priorisation (24) de l'application de communication (20) et/ou du réseau de communication (100), à partir d'au moins une des caractéristiques de priorisation (24) suivantes, est réalisée :
- statut d'utilisation de l'application de communication (20)
- disposition de l'application de communication (20) sur un dispositif d'affichage de l'appareil de communication (10)
- importance de l'application de communication (20) pour l'utilisateur et/ou pour l'appareil de communication (10)
- statut actuel du réseau de communication (100)
- heure actuelle
- date actuelle
- contenu et type des données de la requête de communication de données (22)
- informations de l'utilisateur spécifiques à l'utilisateur.

3. Procédé selon l'une des revendications précédentes, **caractérisé en ce que**, au moins une fois, l'étape d'attribution de la caractéristique de priorisation (24) à une application de communication (20) est réalisée par l'utilisateur de l'appareil de communication (10) et/ou le fabricant de l'appareil de communication (10) et/ou l'exploitant du réseau de communication (100).

4. Procédé selon l'une des revendications précédentes, **caractérisé en ce que** les étapes sont réalisées pour au moins deux applications de communication actives (20).

5. Procédé selon l'une des revendications précédentes, **caractérisé en ce que** pour l'étape de comparaison une caractéristique de priorisation (24) est associée à l'application de communication active (20) et la caractéristique de priorisation (24) associée est comparée avec au moins une caractéristique de priorisation (24) d'une autre application de communication active (20) et/ou issue d'une liste de priorités (28).

6. Produit de programme informatique pour la réalisation sur une unité de calcul (30) et stocké sur un support lisible sur ordinateur, présentant :
- des ressources de programme lisibles sur ordinateur qui amènent l'unité de calcul (30) à surveiller des applications de communication (20) sur un appareil de communication (10),
- des ressources de programme lisibles sur ordinateur qui amènent l'unité de calcul (30) à reconnaître une requête de communication de données (22) d'une application de communication active (20),
- des ressources de programme lisibles sur ordinateur qui amènent l'unité de calcul (30) à réaliser une comparaison de l'application de communication active (20) avec au moins une caractéristique de priorisation (24),
- des ressources de programme lisibles sur ordinateur qui amènent l'unité de calcul (30) à libérer, réduire, privilégier, accélérer, retenir ou bloquer une communication de données (26) de l'application de communication active (20) sur la base du résultat de la comparaison,
**caractérisé en ce que** pour l'étape de comparaison, une requête de l'affichage actuel de l'appareil de communication (10) est effectuée, dans lequel la communication de données (26) est libérée lorsque l'application de communication active (20) est en cours d'affichage sur l'affichage, et dans lequel la comparaison de l'application de communication active (20) avec la caractéristique de priorisation (24) de l'application de communication (20) et/ou du réseau de communication (100) est réalisée au moins avec la caractéristique de priorisation (24) lieu de l'appareil de communication (10).

7. Unité de contrôle de données (40) pour un appareil de communication (10), pour la réalisation de toutes les étapes du procédé avec les caractéristiques d'une des revendications 1 à 5, présentant une interface de surveillance (42) pour la surveillance d'applications de communication (20) sur l'appareil de communication (10) et la reconnaissance d'une requête de communication de données (22) d'une application de communication active (20), une unité de comparaison (44) pour une comparaison de l'application de communication active (20) avec au moins une caractéristique de priorisation (24) et une unité de contrôle (46) pour une libération, une réduction, une préférence, une accélération ou un blocage de la communication de données (26) de l'application de communication active (20) sur la base du résultat de la comparaison.

8. Unité de contrôle de données (40) selon la revendication 7, **caractérisée en ce qu'**elle est mise en oeuvre au moins partiellement dans le système d'exploitation de l'appareil de communication (10).

9. Unité de contrôle de données (10) selon l'une des revendications 7 ou 8, **caractérisée en ce qu'**elle est installée au moins partiellement en tant que produit de programme informatique sur l'appareil de communication (10).

10. Unité de contrôle de données (10) selon l'une des revendications 7 à 9, **caractérisée en ce qu'**elle est réalisée au moins partiellement en tant que produit de programme informatique téléchargeable.

11. Unité de contrôle de données (40) selon l'une des revendications 7 à 9, **caractérisée en ce qu'**elle est mise en oeuvre au moins partiellement sur l'appareil de communication (10) et partiellement dans le réseau de communication (100).
